# EUROPEAN PATENT SPECIFICATION

(11) **EP 1 976 181 B1**
(45) Date of publication and mention of the grant of the patent: **02.08.2017**
(21) Application number: 06840588.5
(22) Date of filing: 19.12.2006
(51) Int. Cl.: H04L 29/06, H04L 29/08

(54) **A METHOD, APPARATUS AND DATA DOWNLOAD SYSTEM FOR CONTROLLING THE VALIDITY OF THE DOWNLOAD TRANSACTION**
VERFAHREN, VORRICHTUNG UND DATENHERUNTERLADESYSTEM ZUR KONTROLLE DER GÜLTIGKEIT DER HERUNTERLADETRANSAKTION
PROCÉDÉ, APPAREIL ET SYSTÈME DE TÉLÉCHARGEMENT DE DONNÉES PERMETTANT DE CONTRÔLER LA VALIDITÉ DE LA TRANSACTION DE TÉLÉCHARGEMENT

(30) Priority: 13.01.2006 CN 200610001197
(43) Date of publication of application: 01.10.2008
(73) Proprietor: Huawei Technologies Co., Ltd., Longgang District Shenzhen, Guangdong 518129 (CN)
(72) Inventor: ZHANG, Lei, Guangdong 518129 (CN); GONG, Hua, Guangdong 518129 (CN); ZHONG, Qitao, Guangdong 518129 (CN)
(74) Representative: Körber, Martin Hans
(86) International application number: PCT/CN2006/003485
(87) International publication number: WO 2007/079651

(56) References cited:
- WO-A1-00/27089
- WO-A2-00/41535
- CN-A- 1 698 336
- JP-A- 2004 030 189
- JP-A- 2004 030 189
- KR-A- 20030 052 598

## Description

This application claims the benefit of CN Application No. 200610001197.6 filed on Jan. 13, 2006, titled "DATA DOWNLOAD SYSTEM AND METHOD FOR CONTROLLING EFFECTIVENESS OF A DOWNLOAD TRANSACTION", which is incorporated herein by reference in its entirety.

### Field of the Invention

The present invention relates to the technical field of network communications, in particular, to network data transfer technologies, and more specifically, to a method, a device and a data download system for controlling effectiveness of a download transaction.

### Background of the Invention

With the development of information technology, people get more and more used to obtaining various data via network. For example, the content needed is usually downloaded via a data download system.

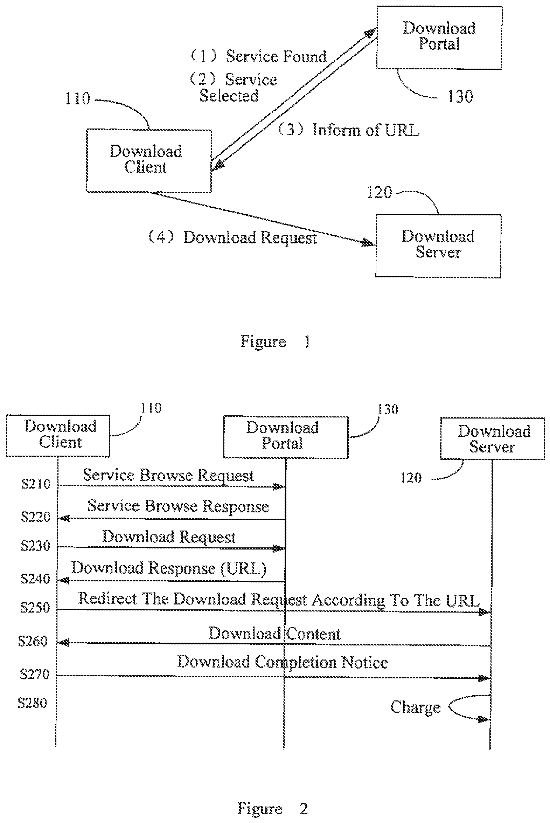

Referring to Fig.1, it shows a block diagram of a data download system in the prior art.

The data download system 100 includes a download client 110, a download server 120 and a download portal 130.

Wherein, download contents (such as music and pictures, etc.) are stored in the download server 120, and related information, such as the introduction of the download contents, the rate and so on, is presented via the download portal 130. The corresponding download address of the presented download content in the download server 120 is also stored in the download portal 130. The download address is usually represented by URL (Uniform Resource Locators).

Referring to Fig.2, it shows a flow chart of the operation of the data download system shown in Fig.1, which includes the following steps.

Step S210: a download client 110 logs in a download portal 130 and initiates a service browse request

Step S220: the download portal 130 returns a service browse response, and the download client 110 browses the contents that can be downloaded.

Step S230: after a user selects the content to be downloaded, a download request is sent to the download portal 130.

Step S240: the download portal 130 informs the download client 110 of the download address of the download content in a download server 120.

Step S250: the download client 110 redirects the download request according to the download address informed by the download portal 130.

Step S260: the download server 120 transfers the corresponding download content to the download client 110.

Step S270: the download client 110 sends a download completion notice to the download server 120 after the content is downloaded.

Step S280: the download server 120 counts the charge of the download.

in other words, during the operation of the data download system in the prior art, the download client 110 accesses the download portal 130 to view the introduction of the download contents. When the user is interested in a content and the rate of the content is acceptable, the user clicks the download button, and the download portal 130 informs the download client 110 of the static download address of the download content in the download server 120. The download client 110 may directly access the download server 120 via the static download address, and download the content to the local terminal. At this point, the download server 120 counts the download charge for the download client 110.

However, in the data download system and the download process of the prior art, when receiving a content promotion advertisement from a CP (Content Provider), the download client may directly download the content from the download server 120 without going through the download portal 130, so that the user may be misguided for consumption.

This is because some CPs send content promotion advertisements to the download download addresses of the download contents. If the user clicks the address, the content will be downloaded directly from the download server 120, and the user will be charged. Moreover, some CPs may send false propaganda of contents and rates to the user. Because the download server 120 cannot check the effectiveness of the download addresses, the user may be misguided for consumption.

WO 00/27089 A1 (LOCKSTAR INC[US]) 11 May 2000 (2000-05-11) discloses a method for establishing a secure channel from a client to a back-end resource after the client is authenticated, both security and authentication can be achieved.

WO 00/41535 A2 (LOCKSTAR INC[US]) 20 July 2000 (2000-07-20) discloses a method by which data can be securely passed between a client and a back-end resource by sending resource locators instead of the actual data.

JP 2004 030189A (NTT COMM KK) 29 January 2004 (2004-01-29) discloses a contents sales server which receives a contents purchasing request containing a contents ID and an address of a second terminal from a first server, generates an address of an access destination for downloading contents corresponding to the contenst ID, and transmits the address of the access destination to the second terminal.

### Summary of the Invention

In the embodiments of the invention, there is provided a method, a device and a data download system for controlling effectiveness of a download transaction, so that the effectiveness of a download transaction may be controlled.

An embodiment of the invention provides a method for controlling the effectiveness of the download transaction, which includes:
Receiving, by a download server, a download request from a download client; wherein the download request contains a download address corresponding to download content selected by the download client and a transaction ID; and
verifying the transaction ID;
transferring the download content corresponding to the download address to the download client in response to the pass of the verification;
verifying an identity of the download client, wherein the pass of the verification comprises the pass of verifying the identity;
resolving, a transaction ID generation request from a download portal,
generating the transaction ID according to a current download transaction ;and
sending the transaction ID to the download portal;

integrating, by the download portal, the transaction ID into the download address and sending the download address contained the transaction ID to the download client.An embodiment of the invention further provides a data download system, which includes a download server communication with a download client, wherein:

the download server is adapted to resolve a download request containing a download address and a transaction ID from the download client, verify an identity of the download client and the transaction ID, and transfer a download content corresponding to the download address to the download client if the verification is passed;
a download portal; wherein the download portal is adapted to resolve instructions from the download client for selecting the download content, obtain the transaction ID corresponding to a download transaction from the download server, and send the download address corresponding to the download content selected by the download client and the transaction ID to the download client; and
wherein the download server is further adapted to resolve the transaction ID generation request from the download portal, generate the transaction ID according to the download transaction and send the transaction ID to the download portal.

An embodiment of the invention provides a data download server, including
a transaction ID verifying unit, adapted to verify a transaction ID carried in a download request when receiving the download request from the download client; and
a content downloading unit, adapted to provide the corresponding download content to the download client in response to the pass of the verification;
the download server is adapted to resolve a download request containing a download address and a transaction ID from the download client, and verify an identity of the download client;
the download server is adapted to resolve the transaction ID generation request from the download portal, and generate the transaction ID according to the download transaction and send the transaction ID to the download portal.

An embodiment of the invention further provides a data download portal device, which includes:
a content presentation unit, adapted to present related information of a download content stored in a download server;
a transaction ID requesting unit, adapted to request a transaction ID from the download server after a user selects the download content; and
a download address integrating unit, adapted to integrate the transaction ID returned by the download server into a content download address, and send to a download client;
the download portal device is adapted to resolve instructions from the download client for selecting the download content, obtain the transaction ID corresponding to a download transaction from the download server, and send the download address corresponding to the download content selected by the download client and the transaction ID to the download client.

An embodiment of the invention further provides a download client, which is configured to implement a method including:
obtaining a transaction ID and a download address corresponding to a download content from a download portal;
sending a download request containing the download address and the transaction ID to a download server; and
obtaining the download content from the download server;
sending instructions to the download portal.

In the data download system and the method for controlling the effectiveness of the download transaction according to the embodiments of the invention, there exists a transaction control mechanism, and the generation, integration, transfer and verification of the transaction ID for the download transaction may be realized by the download server and the download portal, so that the effectiveness of the download transaction may be controlled, and the static download address in the promotion advertisement of a CP is disabled, therefore the user may be prevented from being misguided for consumption.

In the embodiments of the invention, the transaction ID and the corresponding information are encrypted with a digital abstract signature, so that system security may be further improved.

Additionally, because the transaction ID further corresponds to a time effectiveness parameter and the identity of the download client corresponding to the transaction ID may be authenticated, the transaction ID obtained by some entities via masquerading as a specific download client may be further disabled, so that the overall security of the system may be improved.

### Brief Description of the Drawings

Fig.1 is a block diagram of a data download system in the prior art;
Fig.2 is a flow chart showing the operation of the data download system of the prior art shown in Fig.1;
Fig.3 is a schematic diagram of a data download system according to an embodiment of the invention;
Fig.4 is a flow chart of the method for controlling the effectiveness of a download transaction according to an embodiment of the invention; and
Fig.5 is a block diagram of a data download system according to an embodiment of the invention.

### Detailed Description of the Embodiments

For further understanding the principle, the characteristics and the advantages of the invention, it will now be described in detail in conjunction with specific embodiments.

In an embodiment of the invention, a download address, to which a dynamic transaction ID (Identity, i.e. Unique Number) is added, is provided to a download client by a download portal, and the download client can only download the content from the download server with a valid dynamic transaction ID.

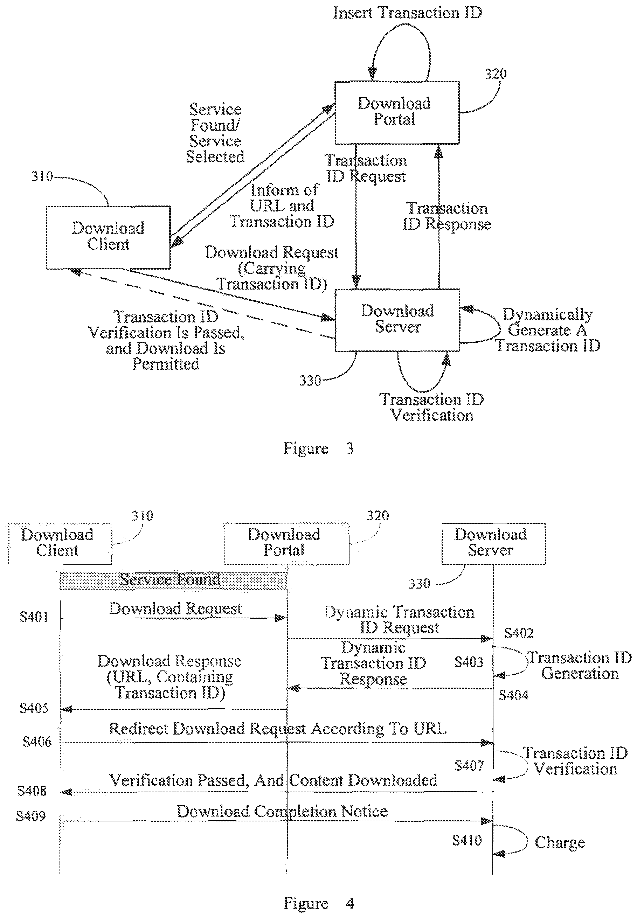

Referring to Fig.3, it shows a schematic diagram of a data download system according to an embodiment of the invention.

The data download system includes a download client 310, a download portal 320 and a download server 330.

The download client 310 is adapted to receive the operation instruction from the user, browse related information of the download content and obtain the download address and dynamic transaction ID via the download portal 320, and obtain the download content from the download server 330.

The download portal 320 is adapted to present related information of the download content, obtain the dynamic transaction ID corresponding to the download transaction from the download server 330, and send the download address and the dynamic transaction ID to the download client 310.

The download server 330 is adapted to store the download content, send the dynamic transaction ID to the download portal 320, verify the dynamic transaction ID from the download client 310, and provide the download content to the download client 310 after the verification is passed.

Referring to Fig.4, it shows a flow chart of the method for controlling the effectiveness of a download transaction according to an embodiment of the invention.

Step S401: the download client 310 finds a content to be downloaded, and sends a download request to the download portal 320 for downloading the content.

Step S402: the download portal 320 sends a dynamic transaction ID request to the download server 330 for applying for a dynamic transaction ID.

Wherein the dynamic transaction ID request may contain three sets of key parameters: a client number, a transaction type and a time effectiveness parameter.

Step S403: the download server 330 dynamically generates a transaction ID, and saves one copy locally after encryption.

Wherein, the dynamic transaction ID may be generated with various algorithms. For example, incremental algorithm may be employed, i.e., starting from 1, the subsequent transaction IDs are successively 2, 3, 4, 5, 6 ..., as long as it is ensured that the newly generated ID is different from the previously generated IDs.

However, more complex transaction ID generation algorithm may also be employed, which will not be described in detail here.

The dynamic transaction ID generated corresponds to the above three sets of key parameters in the dynamic transaction ID request: the client number, the transaction type and the time effectiveness parameter.

The transaction ID may be encrypted in various ways. For example, digital abstract signature may be employed.

Digital abstract signature is a common method for realizing content security, wherein with public key-private key technologies in conjunction with encryption algorithms such as MD5 and so on, secure mutual access between heterogeneous entities under various application models may be realized in an open network.

The invention employs a relatively simple mechanism in the digital abstract signature: an irreversible encryption algorithm. After a content is encrypted by such an encryption algorithm, an attacker cannot crack the password even if the cipher key and the cipher text are obtained. The attacker can only attempt to guess the password, so it is more difficult and takes a longer time to crack the password. As a result, system security may be protected.

Step S404: the download server 330 issues a dynamic transaction ID response to the download portal 320 and the dynamic transaction ID is carried in the dynamic transaction ID response.

Step S405: the download portal 320 integrates the transaction ID into the download address, then issues a download response and informs the download client 310 of the download address.

Wherein, the process in which the transaction ID is integrated into the download address may be realized in a simple way. For example, the transaction ID string is simply spliced to a URL.

For example, the static download address is: http://www.downloadserver.com/mms/mm001.jpg,
and the transaction ID generated by the download server 330 and sent to the download portal 320 is 195692146, then the integrated new address is: http://www.downloadserver.com/mms/mm001.jpg;transactionID=195692146.

Step S406: the download client 310 redirects the download address to the download server 330 and requests to download.

Step S407: the download server 330 authenticates the identity of the download client 310 and verifies the transaction ID.

The download server 330 authenticates the identity of the download client 310 and verifies the transaction ID in the download address of the download client 310,

During the verification, if the transaction ID matches the local copy and the identity of the download client 310 is consistent with the identity of the download client 310 in the copy, the verification is passed.

Step S408: If the verification is passed, download the content to the download client 310 from the download server 330.

Step S409: after the content is downloaded, the download client 310 issues a download completion notice to the download server 330.

Step S410: the download server 330 counts the charge of this download.

In the above embodiments, after a user selects a content to be downloaded, the download portal 320 does not directly inform the download client 310 of the static URL address of the download content. Instead, the download portal 320 first applies to the download server 330 for a dynamic transaction ID. After the download server 330 receives the request, it dynamically generates a transaction ID according to three sets of key parameters (the download client number, the transaction type and the time effectiveness parameter) in the request, and encrypts the transaction ID, then returns the transaction ID to the download portal 320 and saves a copy in the download server 330 locally. The download portal 320 informs the download client 310 after inserting the transaction ID into the download address, and the download client 310 requests to download from the download server 330 based on the download address inserted the transaction ID. The download server 330 authenticates the identity of the download client 310 and verifies the transaction ID in the download address. If the transaction ID matches the local copy and the identity of the download client 310 is consistent with the identity of the download client 310 in the copy, the verification is passed and the download is permitted; otherwise, the verification fails and the download is denied.

In such a mechanism, the static download address in the promotion advertisement of a CP will be disabled, because the transaction ID verification performed by the download server cannot be passed.

Even if a few CPs try to first apply for a transaction ID by masquerading as the identities of specific download clients and then to send advertisements of specific purpose, it may fail because of the time effectiveness parameter contained in the transaction ID and the authentication on the identity of the download client performed by the download server.

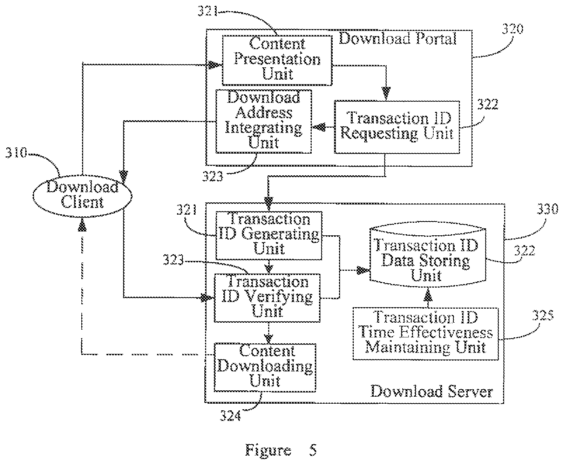

Referring to Fig.5, it shows a block diagram of the data download system according to an embodiment of the invention.

The data download system includes a download client 310, a download portal 320 and a download server 330, wherein:
the download portal 320 includes a content presenting unit 321, a transaction ID requesting unit 322 and a download address integrating unit 323.

The content presentation unit 321 is adapted to present related information of download contents stored in the download server 330.

The transaction ID requesting unit 322 is responsible for requesting a dynamic transaction ID from the download server 330 after a user selects a download content.

The download address integrating unit 323 is responsible for integrating the dynamic transaction ID into the content download address after the download server 330 returns the dynamic transaction ID, and then informing the download client 310.

The download server 330 includes a transaction ID generating unit 331, a transaction ID data storing unit 332, a transaction ID verifying unit 333, a content downloading unit 334 and a transaction ID time effectiveness maintaining unit 335,

The transaction ID generating unit 331 is responsible for dynamically generating a transaction ID and encrypting it when the download server 330 receives a dynamic transaction ID request from the download portal 320, then returning the transaction ID to the download portal 320 and saving a copy of the transaction ID in the transaction ID data storing unit 332;

The transaction ID verifying unit 333 is responsible for verifying the transaction ID carried in the download instruction when the download server 330 receives the download request from the download client 310, and during the verification, the local copy saved in the transaction ID data storing unit 332 needs to be accessed;

The content downloading unit 334 provides the corresponding download content to the download client 310 when the verification on the transaction ID is passed;

The transaction ID time effectiveness maintaining unit 335 is adapted to maintain the data in the transaction ID data storing unit 332, wherein the upmost task is to clear outdated transaction IDs.

The transaction ID time effectiveness maintaining unit 335 may be triggered at scheduled time (for example, once every minute). Each time it is triggered, the whole transaction ID data storing unit 332 will be run over, and each outdated transaction ID will be cleared once it is found.

In conclusion, in the data download system and the method for controlling the effectiveness of the download transaction according to the embodiments of the invention, a dynamic transaction control mechanism is added between the download portal and the download server, and the transaction content is encrypted via the digital abstract signature, so that the download address in the promotion advertisement of a CP may be disabled, and the user may be prevented from being misguided by the promotion advertisement of a CP and generating "undeserved" consumption. As a result, benefit of the user may be protected, the probability of user complaints may be reduced, and the Quality of Service of providers may be improved.

Additional advantages and modifications will readily occur to those skilled in the art. Therefore, the invention in its broader aspects is not limited to the specific details and representative embodiments shown and described herein. Accordingly, various modifications and variations may be made without departing from the spirit or scope of the invention as defined by the appended claims and their equivalents.

## Claims

1. A method for controlling effectiveness of a download transaction, **characterized by** comprising:
receiving, by a download server (330), a download request from a download client (310); wherein the download request contains a download address corresponding to download content selected by the download client (310) and a transaction ID (S406); and
verifying the transaction ID (S407);
transferring the download content corresponding to the download address to the download client (310) in response to the pass of the verification (S408);
verifying an identity of the download client, wherein the pass of the versification (408) comprises the pass of verifying the identity;
resolving, a transaction ID generation request from a download portal (320),
generating the transaction ID according to a current download transaction ;and
sending the transaction ID to the download portal (320);
integrating, by the download portal (320), the transaction ID into the download address and sending the download address contained the transaction ID to the download client (310).

2. The method for controlling effectiveness of the download transaction according to claim 1, further comprising:
storing a copy of the transaction ID generated in the download server (330);
wherein the process of verifying comprises:
determining whether the transaction ID from the download client (310) is consistent with the copy of the transaction ID generated; and
determining whether the download client (310) number is consistent with a client number corresponding to the copy of the transaction ID generated.

3. The method for controlling effectiveness of the download transaction according to claim 2, wherein the download server (330) generates the transaction ID based on a download client number, a transaction type and a time effectiveness parameter provided by the download portal

4. The method for controlling effectiveness of the download transaction according to claim 3, further comprising: verifying the time effectiveness parameter corresponding to the transaction ID, wherein the pass of the verification comprises the pass of verifying the time effectiveness parameter.

5. The method for controlling effectiveness of the download transaction according to claim 1, further comprising: encrypting the transaction ID with a digital abstract signature.

6. The method for controlling effectiveness of the download transaction according to claim 1, wherein the download address is a URL address, and the process of integrating the transaction ID into the download address comprises: splicing the transaction ID string to the URL.

7. A data download system, comprising a download server (330) communication with a download client (310), **characterized by** comprising:
the download server (330) is adapted to resolve a download request containing a download address and a transaction ID from the download client (310), verify an identity of the download client (310) and the transaction ID, and transfer a download content corresponding to the download address to the download client (310) if the verification is passed;
a download portal (320); wherein the download portal (320) is adapted to resolve instructions from the download client (310) for selecting the download content, obtain the transaction ID corresponding to a download transaction from the download server (330), and send the download address corresponding to the download content selected by the download client (310) and the transaction ID integrated by the download portal (320) into the download address to the download client (310); and
wherein the download server (330) is further adapted to resolve the transaction ID generation request from the download portal (320), generate the transaction ID according to the download transaction and send the transaction ID to the download portal (320).

8. A data download server, **characterized by** comprising:
a transaction ID verifying unit (323), adapted to verify a transaction ID carried in a download request when receiving the download request from the download client; and
a content downloading unit (324), adapted to provide the corresponding download content to the download client in response to the pass of the verification;
the download server (330) is adapted to resolve a download request containing a download address and a transaction ID from the download client, and verify an identity of the download client;
the download server is adapted to resolve the transaction ID generation request from the download portal (320), and generate the transaction ID according to the download transaction and send the transaction ID to the download portal.

9. The data download server according to claim 8, further comprising:
a transaction ID generating unit (331), adapted to generate the transaction ID upon receiving a transaction ID generation request from a download portal, and return the transaction ID to the download portal;
a transaction ID data storing unit (322), adapted to store a copy of the transaction ID generated by the transaction ID generating unit.

10. The data download server according to claim 9, further comprising:
a transaction ID time effectiveness maintaining unit (325), adapted to maintain the data in the transaction ID data storing unit.

11. A data download portal (320) **characterized by** comprising:
a content presentation unit (321), adapted to present related information of a download content stored in a download server;
a transaction ID requesting unit (322), adapted to request a transaction ID from the download server after a user selects the download content; and
a download address integrating unit (323), adapted to integrate the transaction ID returned by the download server into a content download address, and send to a download client;
the download portal is adapted to resolve instructions from the download client (310) for selecting the download content, obtain the transaction ID corresponding to a download transaction from the download server (330), and send the download address corresponding to the download content selected by the download client (310) and the transaction ID integrated by the download portal (320) into the download address to the download client (310).

12. A download client (310), configured to implement a method, **characterized by** comprising:
obtaining a transaction ID and a download address corresponding to a download content from a download portal (320);
sending a download request containing the download address and the transaction ID integrated by the download portal (320) into the download address to a download server (330); and
obtaining the download content from the download server (330);
sending instructions to the download portal (320).

## Patentansprüche

1. Verfahren zum Kontrollieren einer Effektivität einer Download-Transaktion, **dadurch gekennzeichnet, dass** es Folgendes umfasst:
Empfangen, durch einen Download-Server (330), einer Download-Anfrage von einem Download-Client (310); wobei die Download-Anfrage eine Download-Adresse, die einem durch den Download-Client (310) ausgewählten Download-Inhalt entspricht, und eine Transaktions-ID enthält (S406); und
Verifizieren der Transaktions-ID (S407);
Übertragen des Download-Inhalts, der der Download-Adresse entspricht, zum Download-Client (310) als Reaktion auf das Bestehen der Verifizierung (S408);
Verifizieren einer Identität des Download-Clients, wobei das Bestehen der Verifizierung (408) das Bestehen des Verifizierens der Identität umfasst;
Auflösen einer Transaktions-ID-Erzeugungsanfrage von einem Download-Portal (320),
Erzeugen der Transaktions-ID gemäß einer gegenwärtigen Download-Transaktion; und
Senden der Transaktions-ID zum Download-Portal (320);
Integrieren, durch das Download-Portal (320), der Transaktions-ID in die Download-Adresse und Senden der in der Transaktions-ID enthaltenen Download-Adresse zum Download-Client (310).

2. Verfahren zum Kontrollieren der Effektivität der Download-Transaktion nach Anspruch 1, das ferner Folgendes umfasst:
Speichern einer Kopie der im Download-Server (330) erzeugten Transaktions-ID;
wobei der Prozess des Verifizierens Folgendes umfasst:
Bestimmen, ob die Transaktions-ID vom Download-Client (310) mit der Kopie der erzeugten Transaktions-ID übereinstimmt; und
Bestimmen, ob die Nummer des Download-Clients (310) mit einer Client-Nummer, die der Kopie der erzeugten Transaktions-ID entspricht, übereinstimmt.

3. Verfahren zum Kontrollieren der Effektivität der Download-Transaktion nach Anspruch 2, wobei der Download-Server (330) die Transaktions-ID basierend auf einer Download-Client-Nummer, einer Transaktionsart und einem Zeiteffektivitätsparameter, der durch das Download-Portal bereitgestellt wird, erzeugt.

4. Verfahren zum Kontrollieren der Effektivität der Download-Transaktion nach Anspruch 3, das ferner Verifizieren des Zeiteffektivitätsparameters, der der Transaktions-ID entspricht, umfasst, wobei das Bestehen der Verifizierung das Bestehen des Verifizierens des Zeiteffektivitätsparameters umfasst.

5. Verfahren zum Kontrollieren der Effektivität der Download-Transaktion nach Anspruch 1, das ferner Verschlüsseln der Transaktions-ID mit einer abstrakten digitalen Signatur umfasst.

6. Verfahren zum Kontrollieren der Effektivität der Download-Transaktion nach Anspruch 1, wobei die Download-Adresse eine URL-Adresse ist und der Prozess des Integrierens der Transaktions-ID in die Download-Adresse Splicing des Transaktions-ID-Strings in die URL umfasst.

7. Datendownload-System, das eine Kommunikation eines Download-Servers (330) mit einem Download-Client (310) umfasst, **dadurch gekennzeichnet, dass** es Folgendes umfasst:
der Download-Server (330) ist dazu ausgelegt, eine Download-Anfrage, die eine Download-Adresse und eine Transaktions-ID enthält, vom Download-Client (310) aufzulösen, eine Identität des Download-Clients (310) und die Transaktions-ID zu verifizieren, und einen Download-Inhalt, der der Download-Adresse entspricht, zum Download-Client (310) zu übertragen, falls die Verifizierung bestanden wird;
ein Download-Portal (320); wobei das Download-Portal (320) dazu ausgelegt ist, Anweisungen vom Download-Client (310) zum Auswählen des Download-Inhalts aufzulösen, die Transaktions-ID, die einer Download-Transaktion entspricht, vom Download-Server (330) zu erhalten, und die Download-Adresse, die dem durch den Download-Client (310) ausgewählten Download-Inhalt entspricht, und die durch das Download-Portal (320) in die Download-Adresse integrierte Transaktions-ID zum Download-Client (310) zu senden; und
wobei der Download-Server (330) ferner dazu ausgelegt ist, die Transaktions-ID-Erzeugungsanfrage vom Download-Portal (320) aufzulösen, die Transaktions-ID gemäß der Download-Transaktion zu erzeugen und die Transaktions-ID zum Download-Portal (320) zu senden.

8. Datendownload-Server, **dadurch gekennzeichnet, dass** er Folgendes umfasst:
eine Transaktions-ID-Verifizierungseinheit (323), die dazu ausgelegt ist, eine in einer Download-Anfrage geführte Transaktions-ID zu verifizieren, wenn die Download-Anfrage vom Download-Client empfangen wird; und
eine Inhaltsdownload-Einheit (324), die dazu ausgelegt ist, den entsprechenden Download-Inhalt an den Download-Client als Reaktion auf das Bestehen der Verifizierung bereitzustellen;
wobei der Download-Server (330) dazu ausgelegt ist, eine Download-Anfrage, die eine Download-Adresse und eine Transaktions-ID enthält, vom Download-Client aufzulösen, und eine Identität des Download-Clients zu verifizieren;
wobei der Download-Server dazu ausgelegt ist, die Transaktions-ID-Erzeugungsanfrage vom Download-Portal (320) aufzulösen und die Transaktions-ID gemäß der Download-Transaktion zu erzeugen und die Transaktions-ID zum Download-Portal zu senden.

9. Datendownload-Server nach Anspruch 8, ferner umfassend:
eine Transaktions-ID-Erzeugungseinheit (331), die dazu ausgelegt ist, die Transaktions-ID nach dem Empfangen einer Transaktions-ID-Erzeugungsanfrage von einem Download-Portal zu erzeugen, und die Transaktions-ID zum Download-Portal zurückzusenden;
eine Transaktions-ID-Datenspeichereinheit (322), die dazu ausgelegt ist, eine Kopie der durch die Transaktions-ID-Erzeugungseinheit erzeugten Transaktions-ID zu speichern.

10. Datendownload-Server nach Anspruch 9, ferner umfassend:
eine Transaktions-ID-Zeiteffektivitätsverwaltungseinheit (325), die dazu ausgelegt ist, die Daten in der Transaktions-ID-Datenspeichereinheit zu verwalten.

11. Datendownload-Portal (320), **dadurch gekennzeichnet, dass** es Folgendes umfasst:
eine Inhaltspräsentationseinheit (321), die dazu ausgelegt ist, zugehörige Informationen eines in einem Download-Server gespeicherten Download-Inhalts zu präsentieren;
eine Transaktions-ID-Anfrageeinheit (322), die dazu ausgelegt ist, eine Transaktions-ID vom Download-Server anzufordern, nachdem ein Benutzer den Download-Inhalt auswählt; und
eine Download-Adressenintegrierungseinheit (323), die dazu ausgelegt ist, die durch den Download-Server zurückgesendete Transaktions-ID in eine Inhaltsdownload-Adresse zu integrieren und zu einem Download-Client zu senden;
wobei das Download-Portal dazu ausgelegt ist, Anweisungen vom Download-Client (310) zum Auswählen des Download-Inhalts aufzulösen, die Transaktions-ID, die einer Download-Transaktion entspricht, vom Download-Server (330) zu erhalten und die Download-Adresse, die dem durch den Download-Client (310) ausgewählten Download-Inhalt entspricht, und die durch das Download-Portal (320) in die Download-Adresse integrierte Transaktions-ID zum Download-Client (310) zu senden.

12. Download-Client (310), der dazu konfiguriert ist, ein Verfahren zu implementieren, das **dadurch gekennzeichnet ist, dass** es Folgendes umfasst:
Erhalten einer Transaktions-ID und einer Download-Adresse, die einem Download-Inhalt entspricht, von einem Download-Portal (320);
Senden einer Download-Anfrage, die die Download-Adresse und die durch das Download-Portal (320) in die Download-Adresse integrierte Transaktions-ID enthält, zu einem Download-Server (330); und
Erhalten des Download-Inhalts vom Download-Server (330);
Senden von Anweisungen zum Download-Portal (320).

## Revendications

1. Procédé permettant de contrôler l'efficacité d'une transaction de téléchargement, **caractérisé en ce qu'**il comprend les étapes consistant à :
recevoir, par un serveur de téléchargement (330), une demande de téléchargement provenant d'un client de téléchargement (310) ; dans lequel la demande de téléchargement contient une adresse de téléchargement correspondant à un contenu de téléchargement sélectionné par le client de téléchargement (310) et un identifiant de transaction (S406) ; et
vérifier l'identifiant de transaction (S407) ;
transférer le contenu de téléchargement correspondant à l'adresse de téléchargement au client de téléchargement (310) en réponse à la réussite de la vérification (S408) ;
vérifier une identité du client de téléchargement, dans lequel la réussite de la vérification (408) comprend la réussite de la vérification de l'identité ;
résoudre une demande de génération d'un identifiant de transaction provenant d'un portail de téléchargement (320),
générer l'identifiant de transaction en fonction d'une transaction de téléchargement actuelle ; et
envoyer l'identifiant de transaction au portail de téléchargement (320) ;
intégrer, par le portail de téléchargement (320), l'identifiant de transaction à l'adresse de téléchargement et envoyer l'adresse de téléchargement contenue dans l'identifiant de transaction au client de téléchargement (310).

2. Procédé permettant de contrôler l'efficacité de la transaction de téléchargement selon la revendication 1, comprenant en outre l'étape consistant à :
stocker une copie de l'identifiant de transaction généré dans le serveur de téléchargement (330) ;
dans lequel le processus de vérification comprend les étapes consistant à :
déterminer si l'identifiant de transaction provenant du client de téléchargement (310) est compatible avec la copie de l'identifiant de transaction généré ; et
déterminer si le numéro du client de téléchargement (310) est compatible avec un numéro de client correspondant à la copie de l'identifiant de transaction généré.

3. Procédé permettant de contrôler l'efficacité de la transaction de téléchargement selon la revendication 2, dans lequel le serveur de téléchargement (330) génère l'identifiant de transaction sur la base d'un numéro de client de téléchargement, d'un type de transaction et d'un paramètre d'efficacité temporelle prévus par le portail de téléchargement.

4. Procédé permettant de contrôler l'efficacité de la transaction de téléchargement selon la revendication 3, comprenant en outre l'étape consistant à : vérifier le paramètre d'efficacité temporelle correspondant à l'identifiant de transaction, dans lequel la réussite de la vérification comprend la réussite de la vérification du paramètre d'efficacité temporelle.

5. Procédé permettant de contrôler l'efficacité de la transaction de téléchargement selon la revendication 1, comprenant en outre l'étape consistant à : chiffrer l'identifiant de transaction avec une signature de résumé numérique.

6. Procédé permettant de contrôler l'efficacité de la transaction de téléchargement selon la revendication 1, dans lequel l'adresse de téléchargement est une adresse URL, et le processus d'intégration de l'identifiant de transaction dans l'adresse de téléchargement comprend : le raccordement de la chaîne d'identifiant de transaction à l'URL.

7. Système de téléchargement de données, comprenant un serveur de téléchargement (330) en communication avec un client de téléchargement (310), **caractérisé en ce qu'**il comprend :
le serveur de téléchargement (330) est adapté pour résoudre une demande de téléchargement contenant une adresse de téléchargement et un identifiant de transaction provenant du client de téléchargement (310), vérifier une identité du client de téléchargement (310) et l'identifiant de transaction, et transférer un contenu de téléchargement correspondant à l'adresse de téléchargement au client de téléchargement (310) si la vérification est réussie ;
un portail de téléchargement (320) ; dans lequel le portail de téléchargement (320) est adapté pour résoudre des instructions provenant du client de téléchargement (310) permettant de sélectionner le contenu de téléchargement, obtenir l'identifiant de transaction correspondant à une transaction de téléchargement provenant du serveur de téléchargement (330), et envoyer l'adresse de téléchargement correspondant au contenu de téléchargement sélectionné par le client de téléchargement (310) et l'identifiant de transaction intégré par le portail de téléchargement (320) dans l'adresse de téléchargement au client de téléchargement (310) ; et
dans lequel le serveur de téléchargement (330) est adapté en outre pour résoudre la demande de génération d'identifiant de transaction provenant du portail de téléchargement (320), générer l'identifiant de transaction en fonction de la transaction de téléchargement et envoyer l'identifiant de transaction au portail de téléchargement (320).

8. Serveur de téléchargement de données, **caractérisé en ce qu'**il comprend :
une unité de vérification d'un identifiant de transaction (323), adaptée pour vérifier un identifiant de transaction acheminé dans une demande de téléchargement lors de la réception de la demande de téléchargement provenant du client de téléchargement ; et
une unité de téléchargement de contenu (324), adaptée pour fournir le contenu de téléchargement correspondant au client de téléchargement en réponse à la réussite de la vérification ;
le serveur de téléchargement (330) est adapté pour résoudre une demande de téléchargement contenant une adresse de téléchargement et un identifiant de transaction provenant du client de téléchargement, et vérifier une identité du client de téléchargement ;
le serveur de téléchargement est adapté pour résoudre la demande de génération d'identifiant de transaction provenant du portail de téléchargement (320), et générer l'identifiant de transaction en fonction de la transaction de téléchargement et envoyer l'identifiant de transaction au portail de téléchargement.

9. Serveur de téléchargement de données selon la revendication 8, comprenant en outre :
une unité de génération d'un identifiant de transaction (331), adaptée pour générer l'identifiant de transaction lors de la réception d'une demande de génération d'identifiant de transaction provenant d'un portail de téléchargement, et renvoyer l'identifiant de transaction au portail de téléchargement ;
une unité de stockage de données d'identifiant de transaction (322), adaptée pour stocker une copie de l'identifiant de transaction générée par l'unité de génération d'identifiant de transaction.

10. Serveur de téléchargement de données selon la revendication 9, comprenant en outre :
une unité de conservation de l'efficacité temporelle de l'identifiant de transaction (325), adaptée pour conserver les données dans l'unité de stockage de données de l'identifiant de transaction.

11. Portail de téléchargement de données (320), **caractérisé en ce qu'**il comprend :
une unité de présentation de contenu (321), adaptée pour présenter des informations associées d'un contenu de téléchargement stocké dans un serveur de téléchargement ;
une unité de demande d'un identifiant de transaction (322), adaptée pour demander un identifiant de transaction à partir du serveur de téléchargement après la sélection par un utilisateur du contenu de téléchargement ; et
une unité d'intégration d'adresse de téléchargement (323), adaptée pour intégrer l'identifiant de transaction renvoyé par le serveur de téléchargement dans une adresse de téléchargement de contenu, et envoyer à un client de téléchargement ;
le portail de téléchargement est adapté pour résoudre des instructions provenant du client de téléchargement (310) permettant de sélectionner le contenu de téléchargement, obtenir l'identifiant de transaction correspondant à une transaction de téléchargement provenant du serveur de téléchargement (330), et envoyer l'adresse de téléchargement correspondant au contenu de téléchargement sélectionné par le client de téléchargement (310) et l'identifiant de transaction intégré par le portail de téléchargement (320) dans l'adresse de téléchargement au client de téléchargement (310).

12. Client de téléchargement (310), conçu pour mettre en oeuvre un procédé, **caractérisé en ce qu'**il comprend les étapes consistant à :
obtenir un identifiant de transaction et une adresse de téléchargement correspondant à un contenu de téléchargement provenant d'un portail de téléchargement (320) ;
envoyer une demande de téléchargement contenant l'adresse de téléchargement et l'identifiant de transaction intégré par le portail de téléchargement (320) dans l'adresse de téléchargement à un serveur de téléchargement (330) ; et
obtenir le contenu de téléchargement provenant du serveur de téléchargement (330) ; envoyer des instructions au portail de téléchargement (320).
